# EUROPÄISCHE PATENTANMELDUNG

(11) **EP 2 565 222 A1**
(43) Veröffentlichungstag der Anmeldung: **06.03.2013**
(21) Anmeldenummer: 12182110.2
(22) Anmeldetag: 29.08.2012
(51) Int. Cl.: C08J 7/04, C08L 23/02, C08L 69/00, C09D 123/02, C09D 169/00

(54) **Siegellack**

(30) Priorität: 31.08.2011 DE 102011081873
(71) Anmelder: Constantia Hueck Folien GmbH & Co. KG, 92712 Pirk (DE)
(72) Erfinder: Kesmarszky, Dr. Thomas, 92729 Weiherhammer (DE); Kaczmarek, Dr.-Ing. Dirk, 92637 Weiden (DE); Frischmann, Stefan, 92648 Vohenstrauß (DE)
(74) Vertreter: Rau, Schneck & Hübner

(57) **Zusammenfassung**

Siegellack (1) welcher unter Normalbedingungen flüssig und zu mindestens 50 % UV-durchlässig ist.

## Beschreibung

Die Erfindung betrifft ein Verfahren zur Herstellung von Siegellack sowie einen Siegellack. Die Erfindung betrifft weiterhin ein Verfahren zur Herstellung einer Siegelschicht, eine Siegelschicht und eine Verpackung.

Zum Verschluss einer Verpackung kann beispielsweise eine Kunststoff-Folie verwendet werden. Ausschlaggebend für die Funktion der Verpackung sind hierbei die Siegelnähte zwischen der Deckelfolie und der restlichen Verpackung. Ein Parameter zur Charakterisierung einer Siegelnaht ist die Siegelnahtfestigkeit. Grundsätzlich wird hierbei zwischen Peel-Versiegelungen (abziehbare Versiegelungen) mit geringer Siegelnahtfestigkeit und Festversiegelungen mit einer hohen Siegelnahtfestigkeit unterschieden.

Je nach Bedarf muss die Verpackung weitere physikalische und chemische Eigenschaften aufweisen.

Der Erfindung liegt die Aufgabe zugrunde, ein Verfahren zur Herstellung von Siegellack zu verbessern.

Diese Aufgabe wird durch die Merkmale des Anspruchs 1 gelöst.

Der Kern der Erfindung besteht darin, ein Versiegelungs-Mittel ausgewählt aus der Gruppe von cycloolefinischem Copolymer (COC) und Polycarbonat (PC) in einem organischen Lösungsmittel zu lösen. Der Siegellack ist somit sehr einfach herstellbar.

Eine weitere Aufgabe der Erfindung besteht darin, einen verbesserten Siegellack bereitzustellen.

Diese Aufgabe wird durch die Merkmale des Anspruchs 2 gelöst.

Der erfindungsgemäße Siegellack ist unter Normalbedingungen flüssig und zu mindestens 70 % UV-durchlässig. Er ist somit auf besonders einfache Weise applizierbar. Er ist außerdem zur Sterilisierung des Verpackungsinhalts mittels UV-Strahlung, insbesondere unterhalb von 240 nm, geeignet.

Gemäß einem Aspekt der Erfindung weist der Siegellack zumindest einen Anteil ausgewählt aus der Gruppe von cycloolefinischem Copolymer (COC) und Polycarbonat (PC) auf.

Er kann außerdem einen Anteil ausgewählt aus der Gruppe von substituierten Benzolen wie z.B. α-Methylstyrol, Styrol und funktionellen Kautschuken, insbesondere Styrol-Kohlenwasserstoff-Blockcopolymeren, beispielsweise SEBS, SBS, SIBS, SIS aufweisen.

Der Siegellack kann auch aus reinem COC bestehen.

Er kann Randgruppen ausgewählt aus der Gruppe von Maleinsäure modifizierten Kohlenwasserstoffharzen aufweisen. Hierdurch können die physikalischen und chemischen Eigenschaften des Siegellacks, wie insbesondere die Haftfähigkeit, auf einfache Weise beeinflusst werden.

Es handelt sich insbesondere um Heißsiegellack.

Mit dem erfindungsgemäßen Siegellack lässt sich auf besonders einfache Weise eine Siegelschicht herstellen.

Je nach Bedarf können deren mechanische Eigenschaften, insbesondere deren Peelfähigkeit, durch Auswahl der Trocknungs-Parameter des Siegellacks, insbesondere der Trocknungs-Temperatur und/oder der TrocknungsDauer und/oder des Trocknungs-Drucks, beeinflusst werden.

Die erfindungsgemäße Siegelschicht zeichnet sich durch eine einstellbare Siegelnahtfestigkeit aus. Die Siegelnahtfestigkeit kann von leicht peelbar ("easy-peel") über peelbar ("peel") bis zu einer Festversiegelung ("no peel") reichen.

Die Vorteile der erfindungsgemäßen Verpackung entsprechen denjenigen, die bereits vorstehend beschrieben wurden.

Vorzugsweise ist das Träger-Element, auf welches die Siegelschicht aufgebracht ist, als Kunststoff-Folie ausgebildet.

Es ist insbesondere UV-transparent ausgebildet. Es hat insbesondere einen Transmissionsgrad von mindestens 50 %, insbesondere mindestens 70 %, insbesondere mindestens 90 %, für Strahlung im UV-Bereich, insbesondere mit Wellenlängen unter 240 nm.

Weitere Vorteile und Details der Erfindung ergeben sich aus der Beschreibung eines Ausführungsbeispiels.

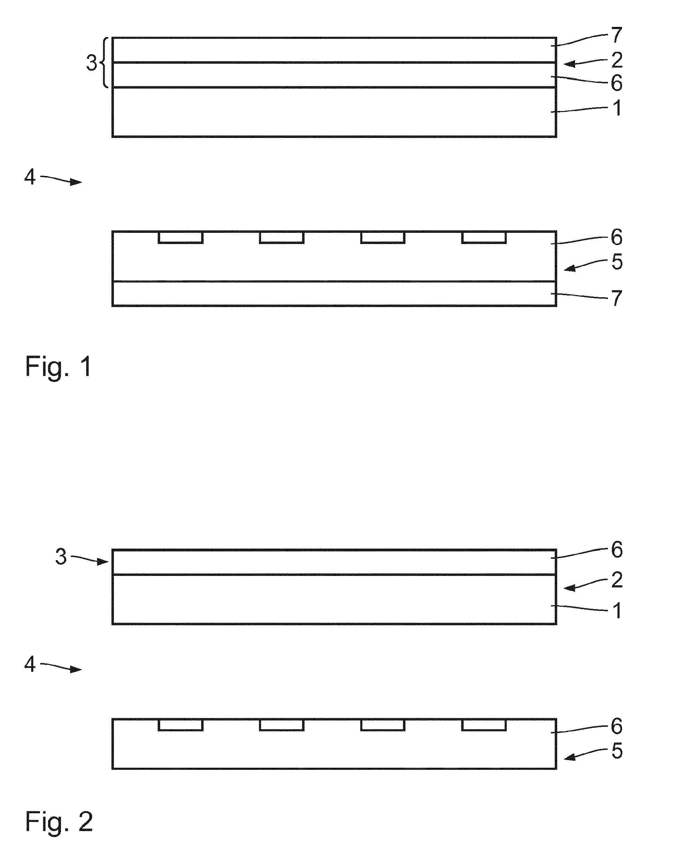

- Fig. 1: zeigt eine schematische Darstellung einer erfindungsgemäßen Verpackung.
- Fig. 2: zeigt eine entsprechende Darstellung einer weiteren Ausführungsform einer Verpackung.
- Fig. 3: zeigt die Abhängigkeit der Siegelnahtfestigkeit von Siegellacken unterschiedlicher Zusammensetzung von der Temperatur des Trocknungsfensters.
- Fig. 4: zeigt die Abhängigkeit der Siegelnahtfestigkeit unterschiedlicher Siegellacke in Abhängigkeit vom prozentualen Anteil COC derselben.

Zur Herstellung des Siegellacks 1 wird ein Versiegelungs-Mittel in einem organischen Lösungsmittel gelöst.

Das Versiegelungs-Mittel ist ausgewählt aus der Gruppe von cycloolefinischem Copolymer (COC) und Polycarbonat (PC). Es kann auch einen Anteil ausgewählt aus der Gruppe von substituierten Benzolen wie z.B. α-Methylstyrol, Styrol und funktionellen Kautschuken, insbesondere Styrol-Kohlenwasserstoff-Blockcopolymeren, beispielsweise SEBS, SBS, SIBS, SIS aufweisen. Zu Herstellung des Versiegelungs-Mittels ist ein Löseverfahren unter Vorlage eines organischen Lösemittels und Zugabe von Harzen unter Rühren bis zur vollständigen Auflösung vorgesehen. Anschließend können die zuerst angesetzten Lösungen der einzelnen Harze in organischen Lösemitteln unter Rühren in einem Additionsverfahren gemischt werden. Beim Löseverfahren ist insbesondere eine Erwärmung des organischen Lösemittels vorgesehen. Das Lösemittel wird insbesondere auf eine Temperatur im Bereich von 40°C bis 70°C erwärmt. Das Additionsverfahren findet insbesondere bei Normaltemperatur statt. Alternativ können die Lösungen auch beim Additionsverfahren auf Temperaturen im Bereich von 40°C bis 70°C erwärmt werden.

Als geeignete Lösemittel dienen beispielsweise aliphatische, hydrierte, cyclische und lineare bzw. verzweigten Kohlenwasserstoffe, Ketone sowie cyclische Ether, insbesondere cyclische aliphatische bzw. aromatische Ether.

Das Versiegelungs-Mittel ist insbesondere transparent. Es liegt als Newton'sche Lösung vor, die insbesondere auch unter Scherung, beispielsweise bei der Applikation, newton'sches Fließverhalten zeigt. Ein thixotropes bzw. dilatantes Fließverhalten ist ausgeschlossen.

Im Folgenden werden exemplarisch vier Beispiele für die Zusammensetzung des Versiegelungs-Mittels angegeben:

| Beispiel 1: | | |
|---|---|---|
| | Lösungsmittel: hydrierter, cyclischer Kohlenwasserstoff | 90 Teile |
| | COC-Harz fest | 10 Teile |

| Beispiel 2: | | |
|---|---|---|
| | Lösungsmittel: hydrierter, cyclischer Kohlenwasserstoff | 90 Teile |
| | COC-Harz fest | 6 Teile |
| | Mod. SEBS-Harz fest | 2 Teile |
| | Kohlenwasserstoff-Harz fest | 2 Teile |

| Beispiel 3: | | |
|---|---|---|
| | COC-Harz flüssig | 70 Teile |
| | Mod. SEBS-Harz flüssig | 15 Teile |
| | Kohlenwasserstoff-Harz flüssig | 15 Teile |

| Beispiel 4: | | |
|---|---|---|
| | Lösungsmittel: cyclischer Ether | 90 Teile |
| | PC-Harz fest | 6 Teile |
| | Mod. SEBS-Harz fest | 2 Teile |
| | Kohlenwasserstoff-Harz fest | 2 Teile |

Um die hohe Transparenz des Versiegelungs-Mittels sicherzustellen, wurde den oben angegebenen, beispielhaften Formulierungen keine weiteren Additiva zugesetzt.

Der derart hergestellte Siegellack 1 ist unter Normalbedingungen flüssig und zu mindestens 50 % UV-durchlässig. Unter UV-Durchlässigkeit sei hierbei verstanden, dass der Lack für elektromagnetische Strahlung im UV-Bereich, insbesondere für Wellenlängen kleiner als 240 nm, transparent ist. Die UV-Durchlässigkeit beträgt insbesondere mindestens 60 %, insbesondere mindestens 70 %, insbesondere mindestens 80 %, insbesondere mindestens 90 %. Der Siegellack 1 ist insbesondere auch im physikalisch trockenen Zustand zu mindestens 50 %, insbesondere mindestens 60 %, insbesondere mindestens 70 %, insbesondere mindestens 80 %, insbesondere mindestens 90 % UV-durchlässig.

Der Lack weist zumindest einen Anteil ausgewählt aus der Gruppe von cycloolefinischem Copolymer (COC) und Polycarbonat (PC) auf. Er kann außerdem zusätzlich einen Anteil ausgewählt aus der Gruppe von substituierten Benzolen wie z.B. α-Methylstyrol, Styrol und funktionellen Kautschuken, insbesondere Styrol-Kohlenwasserstoff-Blockcopolymeren, beispielsweise SEBS, SBS, SIBS, SIS aufweisen.

Er kann auch aus reinem COC bestehen.

Das COC weist insbesondere Randgruppen ausgewählt aus der Gruppe von Maleinsäure modifizierten Kohlenwasserstoff-Harzen auf. Hierdurch können die mechanischen und chemischen Eigenschaften des Siegellacks 1 auf einfache Weise beeinflusst werden.

Zur Herstellung einer Siegelschicht 2 wird der Siegellack 1 auf ein als Siegelfolie 3 ausgebildetes Träger-Element aufgebracht. Der Siegellack 1 liegt hierbei in flüssiger Phase vor. Der erfindungsgemäße Siegellack 1 haftet auf der Siegelfolie 3. Die Hafteigenschaften zur Siegelfolie zeichnen sich dadurch aus, dass eine sehr starke adhäsive Bindung vorliegt. Eine Haftvermittlerschicht wird nicht benötigt.

Als Siegelfolie 3 dient beispielsweise eine Mehrschichtfolie, insbesondere eine Verbundfolie. Sie umfasst z.B. eine Polyamidfolie 7, insbesondere aus aliphatischen Polyamiden, insbesondere aus PA6 oder eine Polyvinylchlorid-Folie sowie insbesondere eine COC-Folie 6. Als Siegelfolie kann auch eine Monofolie, insbesondere eine COC-Folie 6 dienen. Das Material der Siegelfolie 3 ist insbesondere ausgewählt aus der Gruppe von Polyvinylchlorid (PVC), Polycarbonat (PC), Polyoxymethylen (POM), Polymethylmethacrylat (PMMA), cycloolefinischem Copolymer (COC), Barex® und Aclar®.

Die Siegelfolie 3 hat eine Dicke im Bereich von 50 µm bis 500 µm, insbesondere im Bereich von 100 µm bis 150 µm. Sie ist aus einem hoch transparenten Material. Die Siegelfolie 3 ist insbesondere UV-durchlässig. Die UV-Durchlässigkeit der Siegelfolie 3 beträgt insbesondere mindestens 60%, insbesondere mindestens 70%, insbesondere mindestens 80%, insbesondere mindestens 90%.

Nach dem Auftragen des Siegellacks 1 auf die Siegelfolie 3 wird der Lack getrocknet. Hierbei wurde erkannt, dass sich durch gezielte Einstellung der Trocknungs-Bedingungen die Adhäsion der Siegelschicht zur Siegelfolie 3 gezielt verändern lässt. Je nach Bedarf ist zum Trocknen des Siegellacks 1 ein Trocknungsfenster mit Temperaturen im Bereich von 80 °C bis 160 °C insbesondere von mindestens 120 °C vorgesehen. Die Trocknungsdauer liegt im Bereich von 5 s bis 10 s. Der Trocknungsprozess wird bei Normaldruck durchgeführt.

Erfindungsgemäß wurde erkannt, dass sich durch gezielte Einstellung der Formulierung die Eigenschaften, insbesondere die Siegelnahtfestigkeit, der Siegelschicht einstellen lassen. Durch Zugversuche nach der Versiegelung ließ sich zeigen, dass die Trennung zwischen Siegelfolie 3 und Bodenfolie 5 immer kohäsiv verläuft. Eine zusätzliche Haftvermittlerschicht wird insbesondere nicht benötigt.

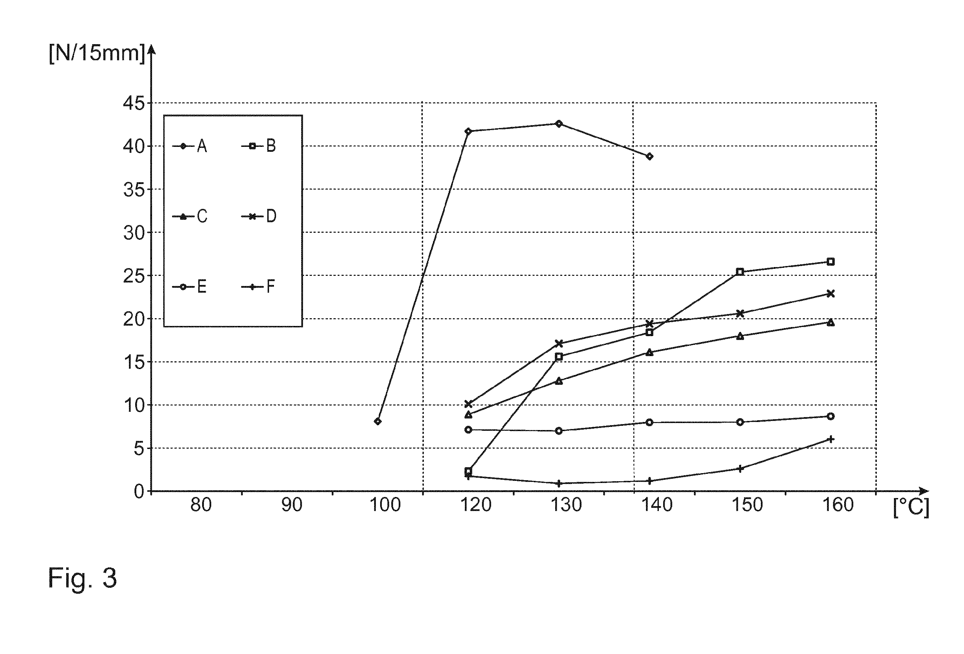

Innerhalb der angegebenen Grenzen führt eine höhere Siegeltemperatur zu einer höheren Siegelnahtfestigkeit. Ebenso führt ein höherer Siegeldruck zu einer höheren Siegelnahtfestigkeit. Siegelprofile für die oben angegebenen Formulierungen sind in der Fig. 3 dargestellt. Hierbei ist die Siegelnahtfestigkeit gegen die Siegeltemperatur aufgetragen. Die Zusammensetzungen der in Fig. 3 dargestellten Formulierungen sind in der Tabelle 1 zusammengefasst. Sie entsprechen teilweise den oben angegebenen Beispielen.

**Tabelle 1**

| | **Lösungsmittel: hydrierter, cylischer Kohlenwasserstoff** | **COC-Harz (fest)** | **Modifiziertes SEBS-Harz (fest)** | **Kohlenwasserstoff-Harz** |
|---|---|---|---|---|
| **A** | 89,69 | 10,31 | 0 | 0 |
| **B** | 89,69 | 8,25 | 2,06 | 0 |
| **C** | 89,69 | 7,22 | 3,09 | 0 |
| **D** | 89,69 | 6,19 | 2,06 | 2,06 |
| **E** | 89,69 | 5,15 | 3,09 | 2,06 |
| **F** | 89,69 | 4,12 | 4,12 | 2,06 |

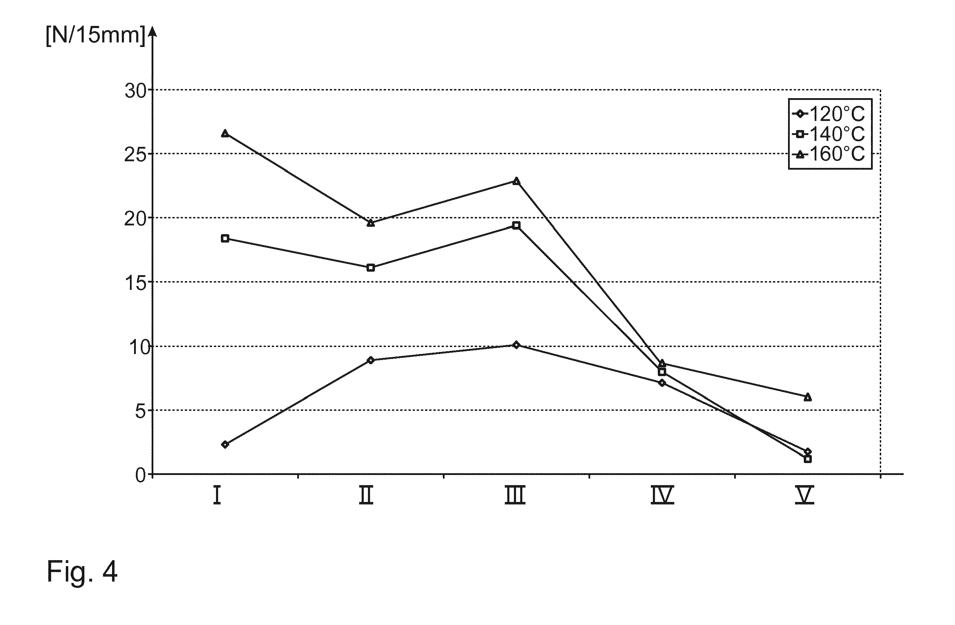

Die erfindungsgemäße Siegelschicht zeichnet sich somit durch eine einstellbare Siegelnahtfestigkeit aus. Durch gezielte Einstellung der Trocknungsparameter und/oder durch gezielte Auswahl der Anteile des COC im Siegellack 1 kann die Siegelnahtfestigkeit der Siegelschicht 2 eingestellt werden. Die Abhängigkeit der Siegelnahtfestigkeit vom prozentualen Anteil COC in der Formulierung des Siegellacks 1 ist in Fig. 4 dargestellt. Die unterschiedlichen Formulierungen der in Figur 4 dargestellten Siegellacke 1 sind in Tabelle 2 aufgelistet. Hierbei sind in Fig. 4 jeweils drei Werte der Siegelnahtfestigkeit für Trockungstemperaturen von 120 °C, 140 °C und 160 °C dargestellt. Es handelt sich im Wesentlichen um Variationen des oben aufgeführten Beispiels 2.

**Tabelle 2**

| | **Lösungsmittel: hydrierter, cylischer Kohlenwasserstoff** | **COC-Harz (fest)** | **Modifiziertes SEBS-Harz (fest)** | **Kohlenwasserstoff-Harz** |
|---|---|---|---|---|
| **I** | 89,69 | 8,25 | 2,06 | 0 |
| **II** | 89,69 | 7,22 | 3,09 | 0 |
| **III** | 89,69 | 6,19 | 2,06 | 2,06 |
| **IV** | 89,69 | 5,15 | 3,09 | 2,06 |
| **V** | 89,69 | 4,12 | 4,12 | 2,06 |

Die Siegelnahtfestigkeit der erfindungsgemäßen Siegelschicht 2 kann insbesondere im Bereich von 2 N / 15 mm bis 5 N / 15 mm ("easy-peel") oder im Bereich von 5 N / 15 mm bis 15 N / 15 mm ("peel") oder im Bereich von 15 N / 15 mm bis 40 N / 15 mm oder mehr ("no peel") liegen.

Bei der Siegelschicht 2 handelt es sich insbesondere um eine Einschichtlackierung. Die Siegelschicht 2 ist mit anderen amorphen Kunststoffen, beispielsweise Polycarbonaten, Polyacrylaten und Polyestern, kombinierbar.

Die Siegelschicht 2 ist UV-durchlässig. Die UV-Durchlässigkeit der Siegelschicht 2 beträgt insbesondere mindestens 60%, insbesondere mindestens 70%, insbesondere mindestens 80%, insbesondere mindestens 90%.

Eine erfindungsgemäße Verpackung 4 umfasst außerdem eine Bodenfolie 5. Die Bodenfolie 5 ist als Monofolie oder als Mehrschichtverbund ausgebildet. Die Bodenfolie 5 umfasst insbesondere ein Material ausgewählt aus der Gruppe von Polyvinylchlorid (PVC), cycloolefinischem Copolymer (COC), Polycarbonat (PC) und Polyoximethylen (POM). Sie besteht insbesondere aus einem derartigen Material. Sie kann insbesondere aus demselben Material wie die Siegelfolie 3 sein. Sie hat eine Dicke im Bereich von 100 µm bis 1.000 µm, insbesondere im Bereich von 300 µm bis 800 µm, insbesondere im Bereich von 450 µm bis 550 µm. Die Dicke der Bodenfolie 5 ist anwendungsbezogen und kann je nach Bedarf ausgewählt werden.

Die Verpackung 4 ist zur Verpackung von Lebensmitteln, pharmazeutischen oder kosmetischen Erzeugnissen vorgesehen. Sie kann als Blisterverpackung ausgebildet sein.

Aufgrund der UV-Durchlässigkeit der Folie 3 und der Siegelschicht 2 ermöglicht die Verpackung 4, insbesondere die Siegelschicht 2, eine UV-Sterilisierung des Verpackungsinhalts.

## Patentansprüche

1. Verfahren zur Herstellung von einem Siegellack (1) umfassend die folgenden Schritte:
a. Bereitstellen eines organischen Lösungsmittels ausgewählt aus der Gruppe von aliphatischen, hydrierten, cyclischen und linearen bzw. verzweigten Kohlenwasserstoffen, Ketonen sowie cyclischen Ethern, insbesondere cyclischen aliphatischen bzw. aromatischen Ethern,
b. Bereitstellen zumindest eines Versiegelungs-Mittels ausgewählt aus der Gruppe von cycloolefinischem Copolymer (COC) und Polycarbonat (PC) und
c. Lösen des mindestens einen Versiegelungs-Mittels in dem Lösungsmittel zur Herstellung einer flüssigen Phase.

2. Verfahren gemäß Anspruch 1 **dadurch gekennzeichnet, dass** mindestens zwei, insbesondere mehrere in Lösungsmittel gelöste Versiegelungs-Mittel addiert werden.

3. Siegellack (1)
a. welcher unter Normalbedingungen flüssig ist, und
b. welcher zu mindestens 50 % UV-durchlässig ist.

4. Siegellack (1) gemäß Anspruch 3, **gekennzeichnet durch** zumindest einen Anteil ausgewählt aus der Gruppe von cycloolefinischem Copolymer (COC) und Polycarbonat (PC).

5. Siegellack (1) gemäß einem der Ansprüche 3 bis 4, **gekennzeichnet durch** einen Anteil ausgewählt aus der Gruppe von substituierten Benzolen wie z.B. α-Methylstyrol, Styrol und funktionellen Kautschuken, insbesondere Styrol-Kohlenwasserstoff-Blockcopolymeren, beispielsweise SEBS, SBS, SIBS, SIS.

6. Siegellack (1) gemäß Anspruch 3, **dadurch gekennzeichnet, dass** er aus reinem COC besteht.

7. Siegellack (1) gemäß einem der Ansprüche 4 bis 6, **dadurch gekennzeichnet, dass** das COC Randgruppen ausgewählt aus der Gruppe von Maleinsäure modifizierten Kohlenwasserstoffharzen aufweist.

8. Siegellack (1) gemäß einem der Ansprüche 3 bis 7, **dadurch gekennzeichnet, dass** es sich um Heißsiegellack handelt.

9. Verfahren zur Herstellung einer Siegelschicht (2) umfassend die folgenden Schritte:
- Bereitstellen eines zu beschichtenden Träger-Elements (3), insbesondere einer Kunststofflage,
- Bereitstellen eines flüssigen Siegellacks (1) gemäß einem der Ansprüche 3 bis 8,
- Auftragen des Siegellacks (1) auf das Träger-Element (3),
- Trocknen des Siegellacks (1).

10. Verfahren gemäß Anspruch 9, **dadurch gekennzeichnet, dass** zum Trocknen des Siegellacks (1) ein Siegelfenster mit Temperaturen im Bereich von 80°C bis 140°C vorgesehen ist.

11. Verfahren gemäß einem der Ansprüche 9 bis 10, **dadurch gekennzeichnet, dass** zum Trocknen des Siegellacks (1) eine Dauer im Bereich von 5 sec bis 10 sec unter Normaldruck vorgesehen ist.

12. Siegelschicht (2) umfassend ein Siegellack (1) gemäß einem der Ansprüche 3 bis 8, **gekennzeichnet durch** eine einstellbare Siegelnahtfestigkeit.

13. Verpackung (4) umfassend
a. mindestens ein Träger-Element (3) und
b. eine auf dieses aufgetragene Schicht umfassend ein Siegellack (1) gemäß einem der Ansprüche 3 bis 8.

14. Verpackung (4) gemäß Anspruch 13, **dadurch gekennzeichnet, dass** das Träger-Element als Kunststoff-Folie (3) ausgebildet ist.

15. Verpackung (4) gemäß einem der Ansprüche 13 bis 14, **dadurch gekennzeichnet, dass** das Träger-Element (3) UV-transparent ausgebildet ist.
